(19) Europäisches Patentamt
European Patent Office
Office européen des brevets

(11) EP 4 786 524 A1

(12) **EUROPEAN PATENT APPLICATION**
published in accordance with Art. 153(4) EPC

(43) Date of publication:
**05.08.2026 Bulletin 2026/32**

(21) Application number: **23954469.5**

(22) Date of filing: **24.11.2023**

(51) International Patent Classification (IPC):
***C08G 75/23*** (2006.01) ***C08L 81/06*** (2006.01)
***B01D 71/68*** (2006.01) ***B01D 71/76*** (2006.01)
***B01D 71/08*** (2006.01)

(52) Cooperative Patent Classification (CPC):
**B01D 71/08; B01D 71/68; B01D 71/76; C08G 75/23; C08L 81/06**

(86) International application number:
**PCT/KR2023/019057**

(87) International publication number:
**WO 2025/070886 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.09.2023 KR 20230128069**

(71) Applicant: **UMTR Co. Ltd.**
**Seoul 02792 (KR)**

(72) Inventors:
- **PARK, Sung Ryul**
  **Seoul 06503 (KR)**
- **YOO, Jae Hyun**
  **Seoul 02752 (KR)**
- **PARK, Joon Bum**
  **Seoul 07691 (KR)**
- **MOON, So Young**
  **Seoul 02597 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

# (54) NOVEL POLYMER, MEMBRANE COMPOSITION COMPRISING SAME, AND PES MEMBRANE

(57) The present invention relates to a novel polymer, and more particularly, to a novel polymer having amphipathic properties obtained by introducing ethyl lauroyl arginate into a sulfonated polyethersulfone-based polymer, a membrane composition comprising the novel polymer, and a PES membrane produced using the membrane composition.

[fig. 1]

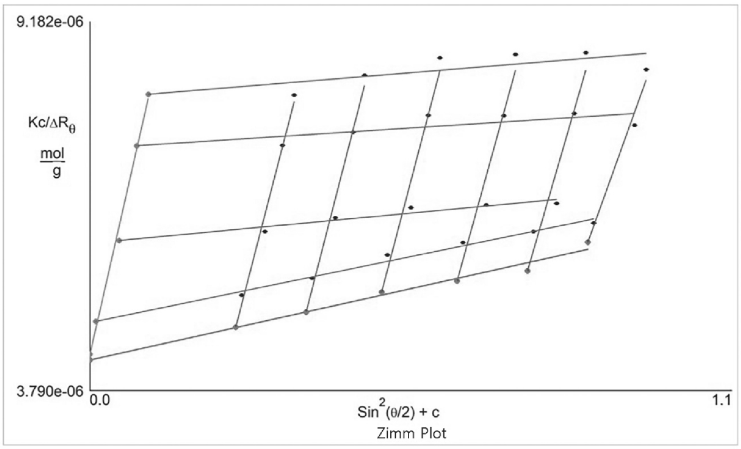

## Description

### CROSS REFERENCE TO RELATED APPLICATION

The present application claims priority to Korean Patent Application No. 10-2018-7017528 filed on November 21, 2016, in the Ministry of Intellectual Property ("MOIP," formerly KIPO), the disclosure of which is incorporated herein by reference.

### BACKGROUND OF THE INVENTION

### Field of the Invention

The present invention relates to a novel polymer, and more particularly, to a novel polymer having amphipathic properties obtained by introducing ethyl lauroyl arginate into a sulfonated polyethersulfone-based polymer, a membrane composition comprising the novel polymer, and a PES membrane produced using the membrane composition.

### Description of the Related Art

A membrane serves as a selective barrier that allows certain components to pass through while retaining others, and is used for the purposes of purification, sterilization filtration, and drainage.
Membranes are widely used in the production of pharmaceuticals and downstream processes in the pharmaceutical industry, and in the medical industry, membranes are used for drug filtration, hemodialysis, drug delivery, intravenous injection, and sterilization.
The most common chemicals used in medical membranes comprise polysulfone (PSU), polyethersulfone (PES), polyvinylidene fluoride (PVDF), polytetrafluoroethylene (PTFE), polypropylene (PP), and modified acrylics. The most common technologies used in medical membranes comprise ultrafiltration (UF), microfiltration (MF), and nanofiltration (NF).
Among these, conventional polyethersulfone (PES)-based membranes have a problem in that proteins and the like are adsorbed due to low hydrophilicity. To improve hydrophilicity, a sulfonated PES material was developed through research titled 'A polymer resin for membranes of devices for purifying or diagnosing biopharmaceuticals containing a nitro group and a method for producing the same' (Korean Patent No. 10-2084359).
In addition, ethyl lauroyl arginate is a substance that causes leakage in bacterial cell walls, causing the release of nucleic acids, DNA, proteins required for survival, and intracellular $K^+$ essential for maintaining bacterial membrane potential, thereby killing bacteria, and that is mainly used as a food packaging material.

[Prior Art Document]

[Patent Document]

(Patent Document 0001) Korean Patent Application Publication No. 10-2018-0087312 (2018.08.01.)

### SUMMARY OF THE INVENTION

The present invention aims to provide a membrane comprising polyethersulfone and ethyl lauroyl arginate, which has improved water permeability for biological solutes and an antibacterial effect compared to conventional membranes.
In order to achieve the above-identified object, a novel polymer according to one embodiment of the present invention comprises a first repeating unit in which ethyl lauroyl arginate and sulfonated polyethersulfone interact with each other.
The first repeating unit may be represented by the following Chemical Formula A:

[Chemical Formula A]

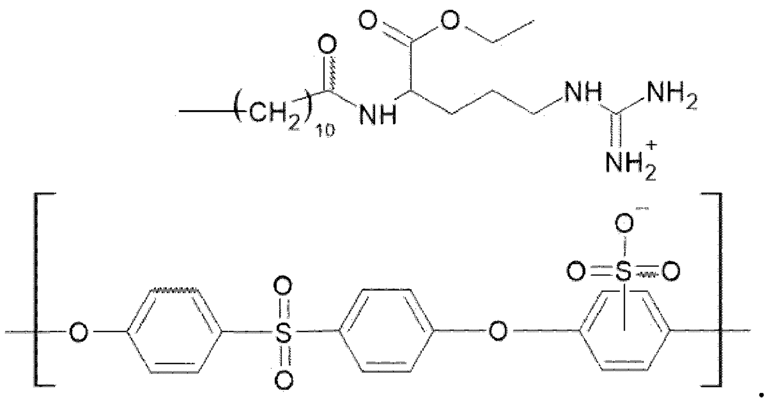

The first repeating unit may be represented by the following Chemical Formula A-1:

**[Chemical Formula A-1]**

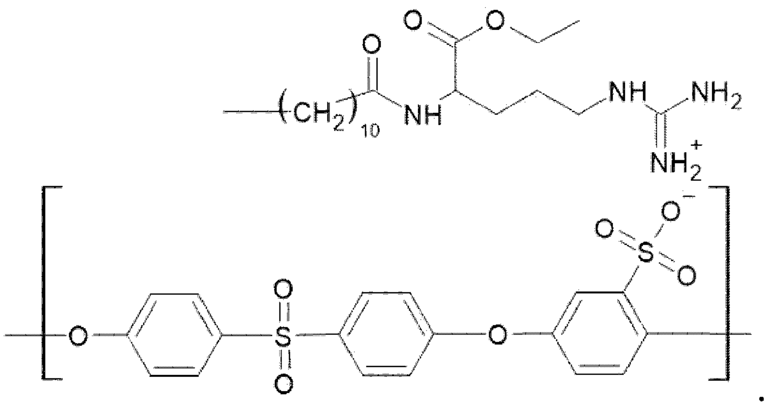

The novel polymer may comprise a second repeating unit represented by the following Chemical Formula B:

**[Chemical Formula B]**

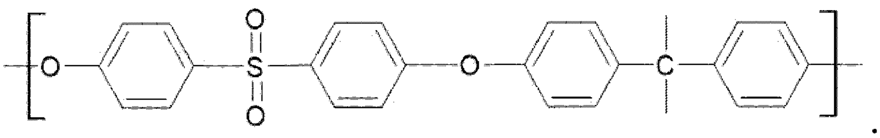

The novel polymer may be represented by the following Chemical Formula 1:

**[Chemical Formula 1]**

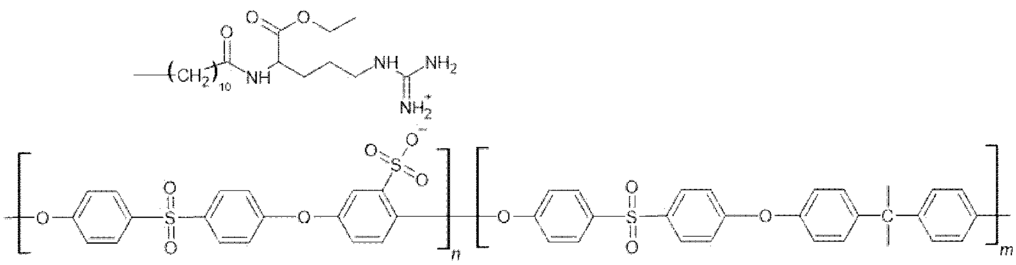

wherein n and m are integers of 0 or greater.

In addition, a membrane composition according to another embodiment of the present invention comprises the novel polymer and may further comprise polyethersulfone.

In addition, a polyethersulfone (PES) membrane according to another embodiment of the present invention

comprises an amphipathic polymer into which ethyl lauroyl arginate has been introduced.

The amphipathic polymer comprises a first repeating unit in which ethyl lauroyl arginate and sulfonated polyethersulfone interact with each other.

The present invention has an effect of providing a novel polymer having amphipathic properties through the interaction of hydrophobic ethyl lauroyl arginate and hydrophilic sulfonated polyethersulfone (sPES).

In addition, providing the novel polymer has an effect of providing a membrane with excellent fouling prevention of conventional PES membranes and improved water permeability for biological solutes.

## BRIEF DESCRIPTION OF THE DRAWINGS

FIG. 1 illustrates results of measuring the Static Light Scattering (SLS) of a novel polymer according to one embodiment of the present invention.

FIG. 2 illustrates results of measuring the NMR of a novel polymer according to one embodiment of the present invention.

FIG. 3 illustrates results of measuring the flowrate of a membrane according to one embodiment of the present invention.

FIG. 4 illustrates results of measuring the removal rate of a membrane according to one embodiment of the present invention.

## DETAILED DESCRIPTION OF THE PREFERRED EMBODIMENT

In order to achieve the above-identified object, a novel polymer according to one embodiment of the present invention comprises a first repeating unit in which ethyl lauroyl arginate and sulfonated polyethersulfone interact with each other.

The first repeating unit may be represented by the following Chemical Formula A:

[Chemical Formula A]

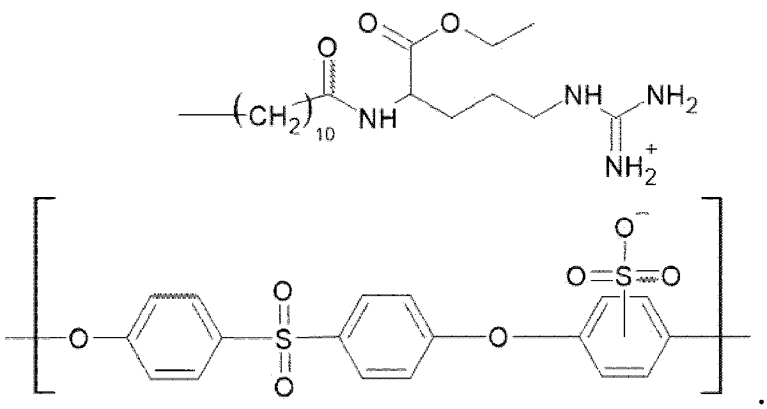

The first repeating unit may be represented by the following Chemical Formula A-1:

[Chemical Formula A-1]

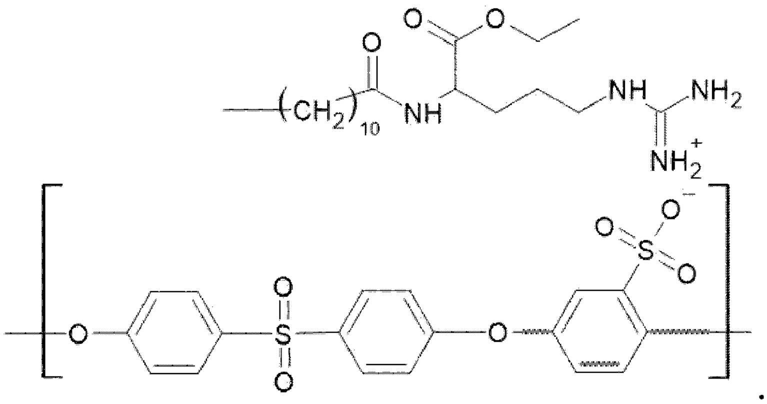

The novel polymer may comprise a second repeating unit represented by the following Chemical Formula B:

[Chemical Formula B]

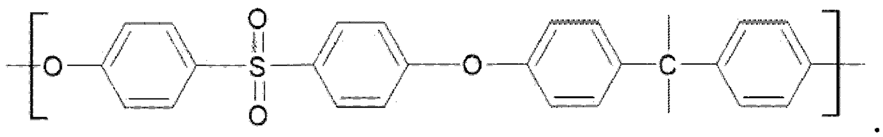

The novel polymer may be represented by the following Chemical Formula 1:

[Chemical Formula 1]

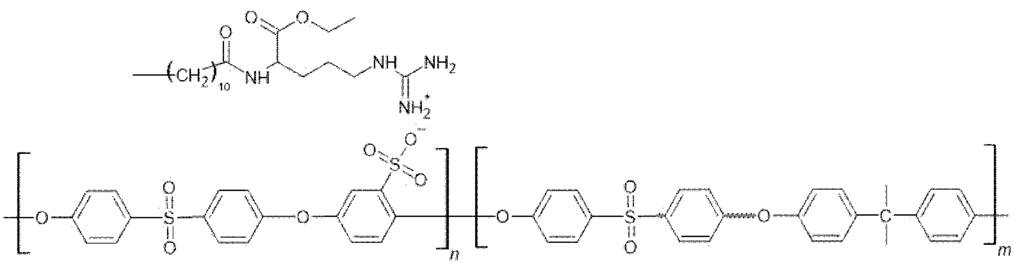

wherein n and m are integers of 0 or greater.

In addition, a membrane composition according to another embodiment of the present invention comprises the novel polymer and may further comprise polyethersulfone.

In addition, a polyethersulfone (PES) membrane according to another embodiment of the present invention comprises an amphipathic polymer into which ethyl lauroyl arginate has been introduced.

The amphipathic polymer comprises a first repeating unit in which ethyl lauroyl arginate and sulfonated polyethersulfone interact with each other.

Hereinafter, embodiments of the present invention will be described in detail so that those skilled in the art to which the present invention pertains can easily practice the invention. However, the present invention may be embodied in various different forms and is not limited to the embodiments described herein.

A novel polymer according to one embodiment of the present invention is based on sulfonated polyethersulfone into which hydrophobic ethyl lauroyl arginate has been introduced.

The novel polymer comprises a first repeating unit in which ethyl lauroyl arginate and sulfonated polyethersulfone interact with each other.

The first repeating unit may be represented by the following Chemical Formula A:

[Chemical Formula A]

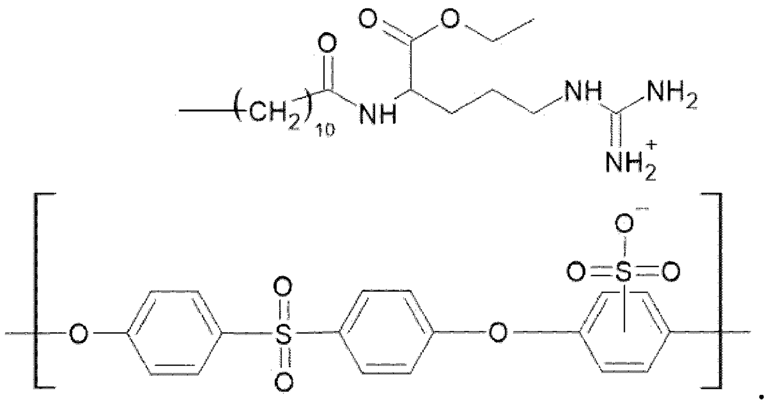

More specifically, the first repeating unit may be represented by the following Chemical Formula A-1:

[Chemical Formula A-1]

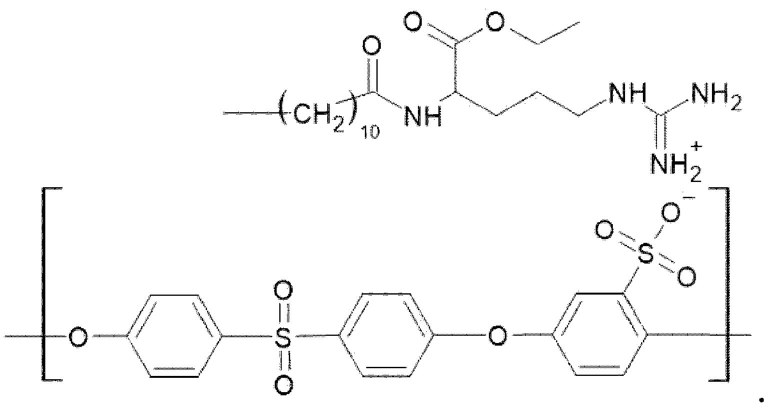

The novel polymer may comprise a second repeating unit represented by the following Chemical Formula B:

[Chemical Formula B]

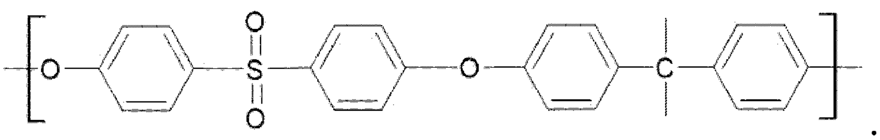

The novel polymer may be represented by the following Chemical Formula 1:

[Chemical Formula 1]

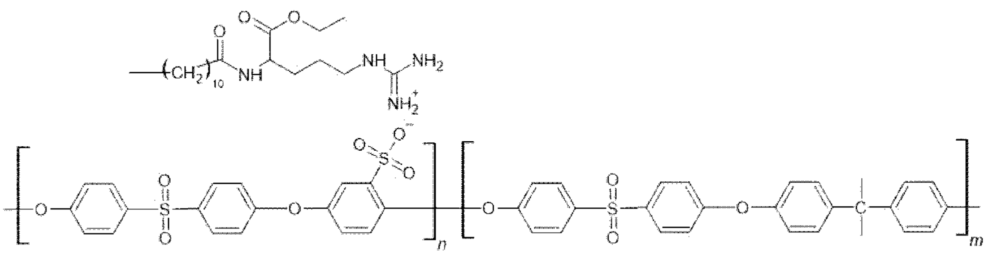

wherein n and m are integers of 0 or greater, wherein m may be 250 to 270, and n may be 15 to 75, and wherein m and n represent the number of moles.

A membrane composition according to another embodiment of the present invention comprises the novel polymer according to one embodiment of the present invention.

The membrane composition further comprises polyethersulfone and may comprise the novel polymer and polyethersulfone.

The membrane composition may further comprise a pore-forming agent. The pore-forming agent may be polyvinylpyrrolidone (PVP) and/or poly ethylene glycol (PEG).

The PVP may be present in an amount of from 0.1 to 2 wt% based on 100 wt% of the total weight of the membrane composition, and the PEG may be present in an amount of from 10 to 40 wt% based on 100 wt% of the total weight of the membrane composition. The PEG may be PEG 200.

The membrane composition may further comprise a pore-size regulator. The pore-size regulator may regulate the pore size of the membrane by controlling the extraction rate of the solvent during the pore-forming process. The pore-size regulator may be LiCl or $CaCl_2$. The pore-size regulator may be present in an amount of from 0.1 to 2 wt% based on 100 wt% of the total weight of the membrane composition.

The membrane composition further comprises a solvent, and the solvent may be dimethyl sulfoxide (DMSO). The solvent may be present in an amount of from 50.9 to 53.4 wt% based on 100 wt% of the total weight of the membrane composition.

In addition, a polyethersulfone (PES) membrane according to another embodiment of the present invention comprises an amphipathic polymer into which ethyl lauroyl arginate has been introduced.

The amphipathic polymer comprises a first repeating unit in which ethyl lauroyl arginate and sulfonated polyethersulfone interact with each other.

The first repeating unit may be represented by the following Chemical Formula A:

[Chemical Formula A]

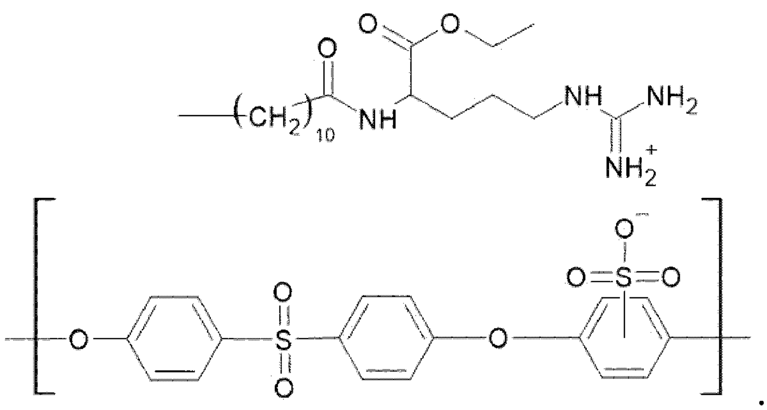

More specifically, the first repeating unit may be represented by the following Chemical Formula A-1:

[Chemical Formula A-1]

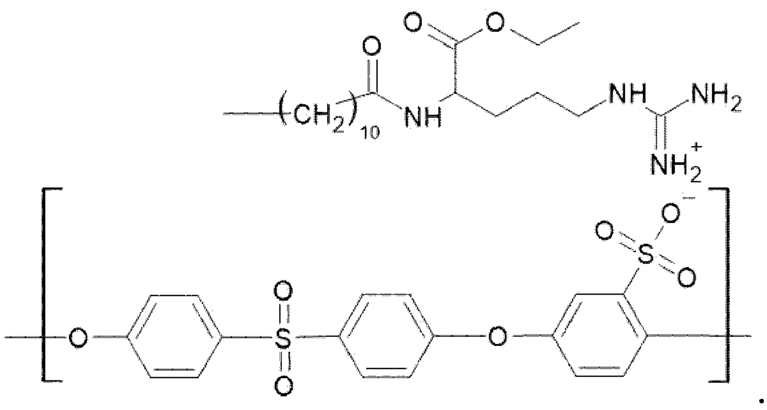

The amphipathic polymer may comprise a second repeating unit represented by the following Chemical Formula B:

[Chemical Formula B]

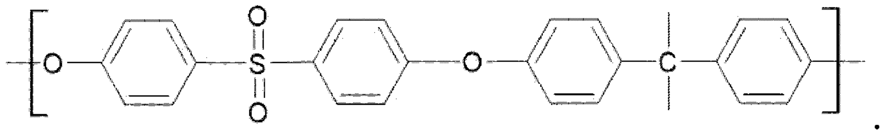

The amphipathic polymer may be represented by the following Chemical Formula 1:

[Chemical Formula 1]

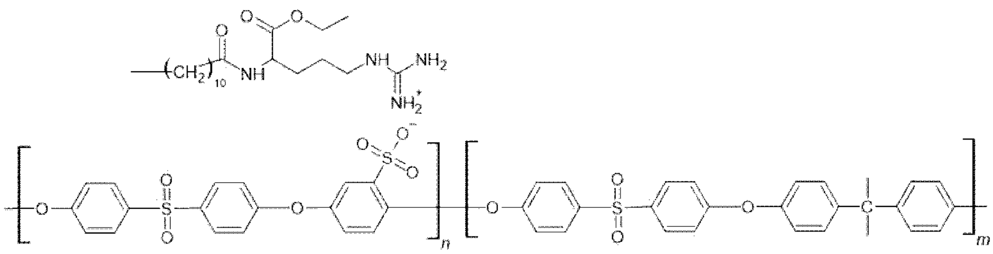

wherein n and m are integers of 0 or greater, wherein m may be 250 to 270, and n may be 15 to 75, and wherein m and n represent the number of moles.

The polyethersulfone (PES) membrane may be produced using the membrane composition.

The present invention is described in more detail through the following examples. The following working examples are provided as examples of the present invention and do not limit the scope of the present invention. These are examples of synthesis, and the amounts and ratios of components may vary depending on the synthesis ratio and amounts.

**Preparation Example: Synthesis of Novel Polymer**

To synthesize sulfonated polyethersulfone-ethyl lauroyl arginate (sLAE) as a novel polymer, the following procedure was carried out.

First, 0.86 mol of 4,4'-dichlorodiphenyl sulfone (DCDPS), 0.64 mol of bisphenol A (BPA), 0.21 mol of sulfonated hydroquinone (sHQ), 0.21 mol of ethyl lauroyl arginate HCl (LAE), and 2.22 g of $K_2CO_3$ were added to 1 L of a mixed solvent at the volume ratio of N-methyl-2-pyrrolidone (NMP):toluene of 2:1, followed by stirring and heating at 160°C for 48 hours under nitrogen conditions. Subsequently, stirring was performed at 190°C for 4 hours followed by natural cooling. The resulting product was washed with deionized water and then separated (washed) with dichloromethane (DCM). After drying, the final product, which is a novel polymer represented by the following Chemical Formula 1, was obtained. In the experimental examples below, the novel polymer is defined as sulfonated polyethersulfone-ethyl lauroyl arginate (sLAE).

[Chemical Formula 1]

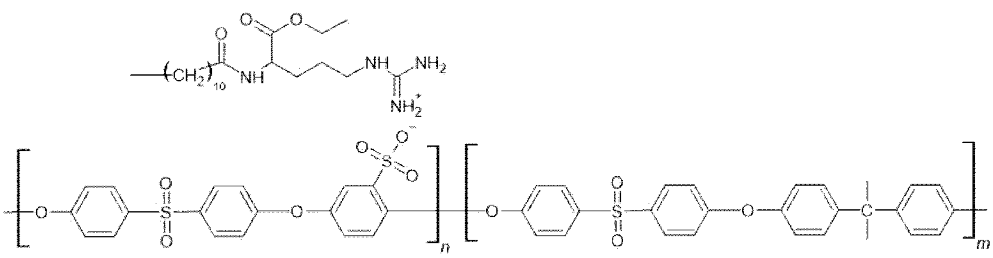

wherein m is 296, and n is 37, and wherein m and n represent the number of moles.

**Measurement Example: Molecular Weight Measurement**

The molar mass of sLAE represented by Chemical Formula 1 synthesized in the above-identified Preparation Example was measured by Static Light Scattering (SLS), and the measurement result graph is shown in FIG. 1. Referring to FIG. 1, the molar mass ($M_W$) of sLAE represented by Chemical Formula 1 synthesized in the above-identified

Preparation Example was measured to be 190,000 g/mol.

### Measurement Example: NMR Analysis

NMR analysis was performed on sLAE represented by Chemical Formula 1 synthesized in the above-identified Preparation Example. $H^1$-NMR was used as NMR, and the results for analyzing the positions of peaks for each element are shown in FIG. 2. Referring to FIG. 2, the integral values of each peak were calculated as a+c=69.68, b+f=32.66, and d+e=38.76 when g=1 was used as the reference, and the integral value of the "*" peak with 3 H atoms was calculated to be 3.28. Based on this calculation, the ratio of m:n in sLAE represented by Chemical Formula 1 of the example is calculated to be 8:1.

### Example: Method for Preparing Polyethersulfone (PES) Membrane

Membrane compositions having the compositional ratios of sLAE (synthesized in the Preparation Example), polyethersulfone (PES), polyvinylpyrrolidone (PVP), poly ethylene glycol (PEG) 200, $CaCl_2$, and dimethyl sulfoxide (DMSO) as shown in Table 1 below were prepared.

Using the compositions in Table 1, sLAE, PVP, PEG 200, $CaCl_2$, and DMSO were mixed to prepare membrane casting solutions.

The membrane casting solutions were cast on a PET film (with a thickness of from 100 to 800 μm) to a thickness of 400 μm, and then treated with nonsolvent induced phase separation (NIPS) in a constant-temperature water bath of deionized (DI) water for 10 minutes. Subsequently, the film was immersed in a constant-temperature water bath consisting of 5 wt% glycerol (Gly) and 95 wt% deionized water for 10 minutes for secondary nonsolvent induced phase separation (NIPS) treatment to prepare a membrane precursor. The membrane precursor was then dried in a drying apparatus at 53°C for 25 minutes to produce the membrane.

**[Table 1]**

| Classification | sLAE (wt%) | PES (wt%) | PVP (wt%) | PEG 200 (wt%) | $CaCl_2$ (wt%) | DMSO (wt%) |
|---|---|---|---|---|---|---|
| Example 1 | 0.5 | 20.0 | 0.1 | 25.0 | 1.0 | 53.4 |
| Example 2 | 1.0 | 20.0 | 0.1 | 25.0 | 1.0 | 52.9 |
| Example 3 | 1.5 | 20.0 | 0.1 | 25.0 | 1.0 | 52.4 |
| Example 4 | 2.0 | 20.0 | 0.1 | 25.0 | 1.0 | 51.9 |
| Example 5 | 3.0 | 20.0 | 0.1 | 25.0 | 1.0 | 50.9 |

### Comparative Example: Method for Preparing Polyethersulfone (PES) Membrane

A membrane composition having the compositional ratio shown in Table 2 below was prepared. Using the composition in Table 2, PVP, PEG 200, $CaCl_2$, and DMSO were mixed to prepare a membrane casting solution.

The prepared casting solution was used to produce a membrane in the same manner as in the above-identified working examples.

**[Table 2]**

| Classification | PES (wt%) | PVP (wt%) | PEG 200 (wt%) | $CaCl_2$ (wt%) | DMSO (wt%) |
|---|---|---|---|---|---|
| Comparative Example | 20.0 | 0.1 | 25.0 | 1.0 | 53.9 |

### Measurement Example: Measurement of Physical Properties

The pure (DI water) flux of each of the membranes produced in the above-identified working examples was measured 4 or 5 times and summarized in Table 3.

In addition, the thickness of each of the membranes produced in the above-identified Examples was measured 10 times and averaged, and the results are summarized in Table 3 below.

In addition, the molecular weight cutoff (MWCO) of each of the membranes produced in the above-identified working examples was measured 4 or 5 times, and the results are summarized in Table 3 below. From the measured data, the pore size and porosity were calculated using Equations 1 and 2 below and summarized in Table 3.

[Equation 1]

$$\text{Porosity, } \varepsilon = \frac{W_w - W_d}{\rho_w \times V}$$

In Equation 1, "ε" denotes porosity, "$W_w$" and "$W_d$" denote the weight of the membrane in the wet state and dry state, respectively, "$\rho_w$" denotes the density of water, and "V" denotes the volume of the membrane in the wet state.

[Equation 2]

$$Mean\ pore\ radius, r_m = \sqrt{\frac{(2.9 - 1.75\varepsilon) \times 8\eta LQ}{\varepsilon \times A \times \Delta P}}$$

In Equation 2, "ε" denotes porosity, "η" denotes water viscosity, "Q" denotes the volumetric flowrate of water ($m^3/s$), "A" denotes the membrane effective area ($m^2$), "ΔP" denotes the applied pressure (pascal, 1 bar=100,000 Pa), and "L" denotes the membrane thickness (m). In Table 3, LMH stands for $L/m^2 \cdot hr$.

**[Table 3]**

| Classifica -tion | Flux [mL/min/ cm²] | Thickness [μm] | Rejection [%] | Pore Size [μm] | Porosity |
|---|---|---|---|---|---|
| Example 1 | 0.318 | 228.2 | 83.95 | 0.0506 | 0.6143 |
| | 0.400 | 237.6 | 84.05 | 0.0607 | 0.5783 |
| | 0.268 | 239 | 87.96 | 0.0473 | 0.6152 |
| | 0.342 | 231.3 | 95.1 | 0.0529 | 0.6128 |
| | 0.277 | 231.4 | 94.73 | 0.0488 | 0.5951 |
| Example 2 | 0.440 | 234.2 | 96.24 | 0.0787 | 0.4261 |
| | 0.268 | 239.5 | 92.87 | 0.0477 | 0.6126 |
| | 0.286 | 239.8 | 89.02 | 0.0489 | 0.6183 |
| | 0.276 | 234.7 | 87.9 | 0.0511 | 0.5629 |
| | 0.223 | 237.7 | 88.23 | 0.0443 | 0.5963 |
| Example 3 | 0.493 | 239.6 | 86.93 | 0.0750 | 0.503 |
| | 0.285 | 245.1 | 92.71 | 0.0533 | 0.559 |
| | 0.323 | 279.3 | 94.12 | 0.0570 | 0.607 |
| | 0.202 | 246.8 | 92.06 | 0.0428 | 0.600 |
| Example 4 | 0.512 | 240.9 | 90.77 | 0.0794 | 0.479 |
| | 0.549 | 238.9 | 90.24 | 0.0855 | 0.450 |
| | 0.494 | 236.3 | 91.4 | 0.0691 | 0.558 |
| | 0.403 | 238.4 | 87.43 | 0.0604 | 0.587 |
| | 0.387 | 234.5 | 89.52 | 0.56 | 0.0605 |
| Example 5 | 0.705 | 235.6 | 90.49 | 0.0801 | 0.579 |
| | 0.510 | 237.5 | 88.12 | 0.0663 | 0.603 |
| | 0.450 | 233.3 | 90.27 | 0.0648 | 0.566 |
| | 0.479 | 231.3 | 88.9 | 0.0661 | 0.571 |

Referring to Table 3, it is confirmed that as the proportion of sLAE increases, the pore size increases and the porosity decreases up to 2.0 wt%. Meanwhile, the removal rate shows an increasing trend up to 1.5 wt%, and the flowrate shows a continuously increasing trend. Therefore, it can be seen that the performance of the membrane can be controlled through the proportion of sLAE.

The "pure water flowrate" and the flow rate of 0.25 wt% PEG200k ("PEG200 flow rate") for each of the membranes produced in the comparative example and the working examples are summarized in FIG. 3. In FIG. 3, the x-axis represents the content of sLAE, where "0" denotes the membrane produced in the comparative example, "0.5" denotes the membrane produced in Example 1, "1" denotes the membrane produced in Example 2, "1.5" denotes the membrane produced in Example 3, "2" denotes the membrane produced in Example 4, and "3" denotes the membrane produced in Example 5. In FIG. 3, the measurements were performed using an Amicon stirred cell under a pressurized condition of 1 bar. The "pure waterflow rate" was measured without stirring, and the "PEG 200 flow rate" was measured with stirring at 180 rpm. The filtered liquid was connected to a balance, and the change in weight over time was measured to calculate the values.

0.25 wt% PEG200k was passed through each of the membranes produced in the comparative example and the working examples, and the removal rate was measured by the ratio of the peak height of PEG200k in the filtered liquid compared to 0.25 wt% PEG200k using UV-Vis. The results are shown in FIG. 4. In FIG. 4, the x-axis represents the content of sLAE, where "0" denotes the membrane produced in the comparative example, "0.5" denotes the membrane produced in Example 1, "1" denotes the membrane produced in Example 2, "1.5" denotes the membrane produced in Example 3, "2" denotes the membrane produced in Example 4, and "3" denotes the membrane produced in Example 5. As an example, in FIG. 4, if 0.25 wt% PEG200k has a peak height of 2 in UV-Vis, and the peak value at the same position of the filtered liquid is 0.5, the removal rate is deemed to be $(2-0.5)/2\times100=75\%$.

Referring to FIG. 4, it is confirmed that the membranes produced in the working examples exhibit a high removal rate for PEG200k.

Although the preferred embodiments of the present invention have been described in detail above, the scope of the present invention is not limited thereto, and various modifications and improvements made by those skilled in the art using the basic concepts of the present invention defined in the following claims also fall within the scope of the present invention.

## Claims

1. A novel polymer comprising a first repeating unit in which ethyl lauroyl arginate and sulfonated polyethersulfone interact with each other.

2. The novel polymer of claim 1, wherein the first repeating unit is represented by the following Chemical Formula A:

[Chemical Formula A]

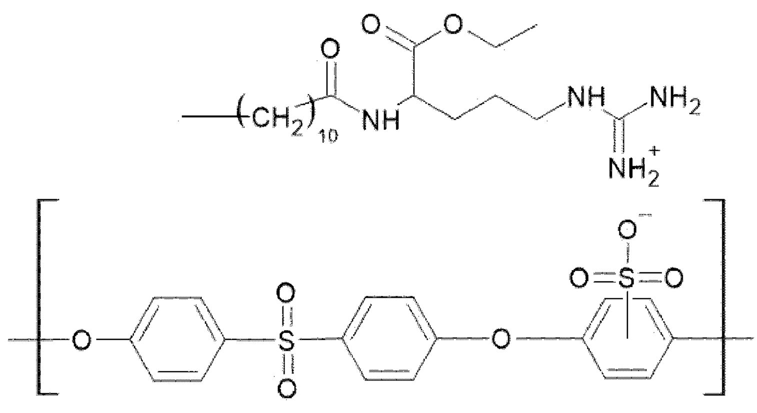

.

3. The novel polymer of claim 2, wherein the first repeating unit is represented by the following Chemical Formula A-1:

[Chemical Formula A-1]

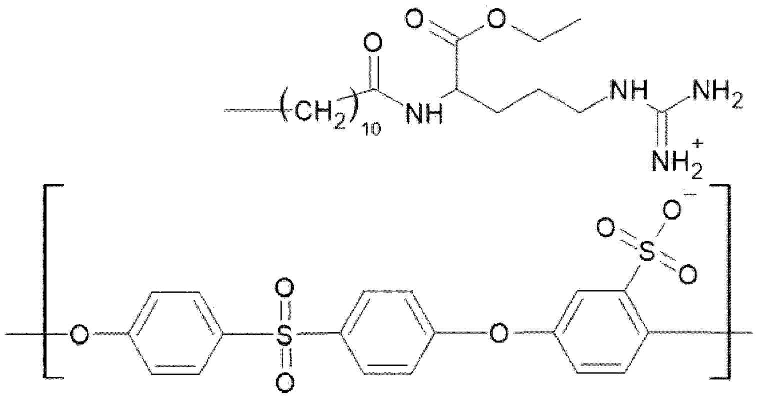
.

**4.** The novel polymer of claim 1, comprising a second repeating unit represented by the following Chemical Formula B:

[Chemical Formula B]

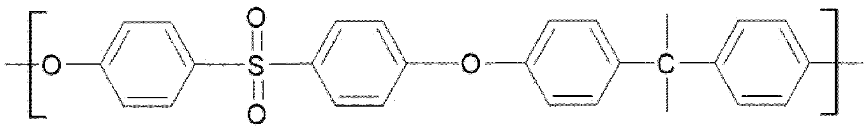
.

**5.** The novel polymer of claim 1, wherein the novel polymer is represented by the following Chemical Formula 1:

[Chemical Formula 1]

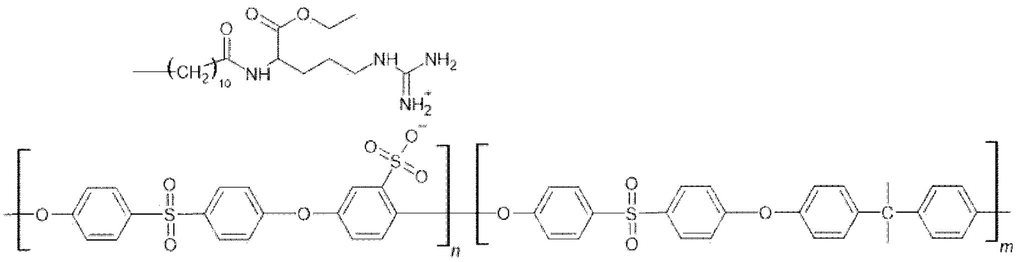

wherein n and m are integers of 0 or greater.

**6.** A membrane composition comprising the polymer of any one of claims 1 to 5.

**7.** The membrane composition of claim 6, further comprising polyethersulfone.

**8.** A polyethersulfone (PES) membrane comprising an amphipathic polymer into which ethyl lauroyl arginate has been introduced.

**9.** The polyethersulfone (PES) membrane of claim 8, wherein the amphipathic polymer comprises a first repeating unit in which ethyl lauroyl arginate and sulfonated polyethersulfone interact with each other.

[fig. 1]

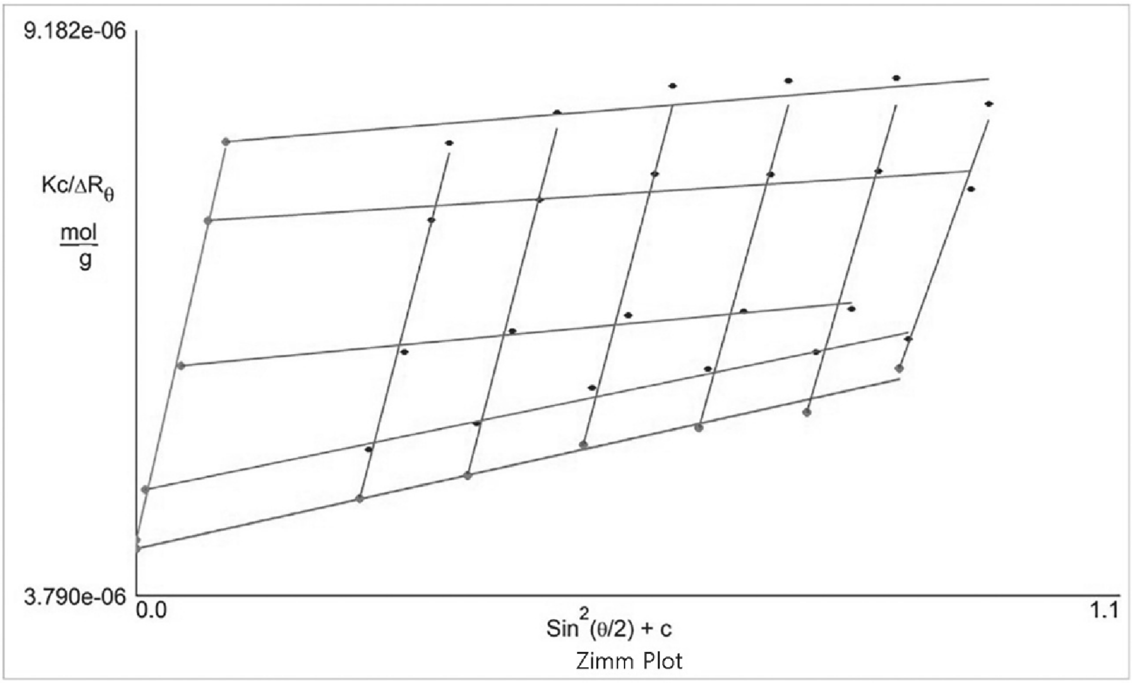

[fig. 2]

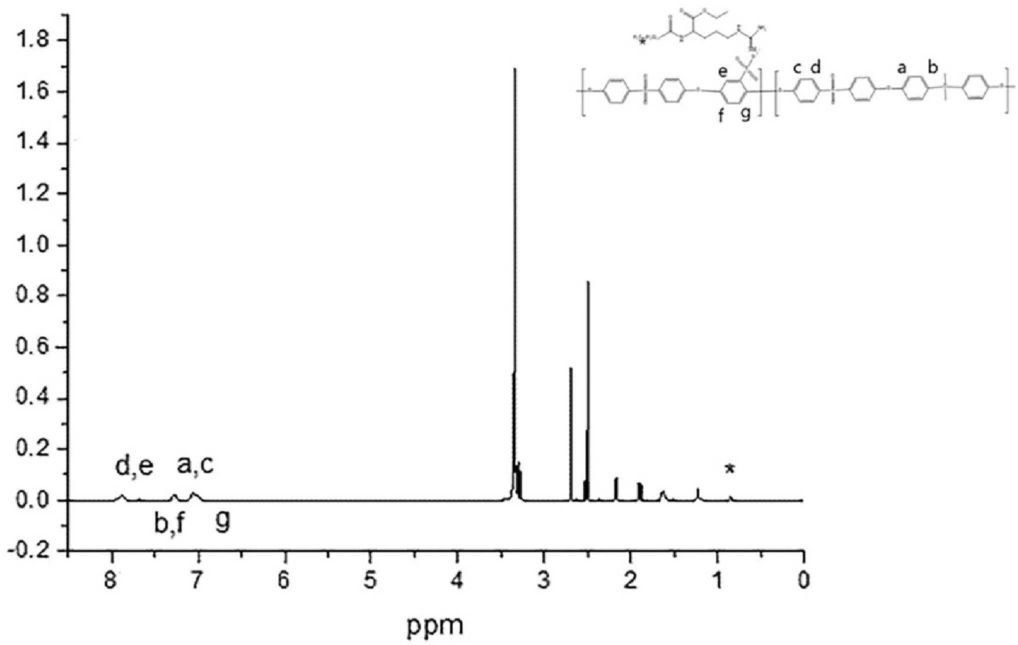

[fig. 3]

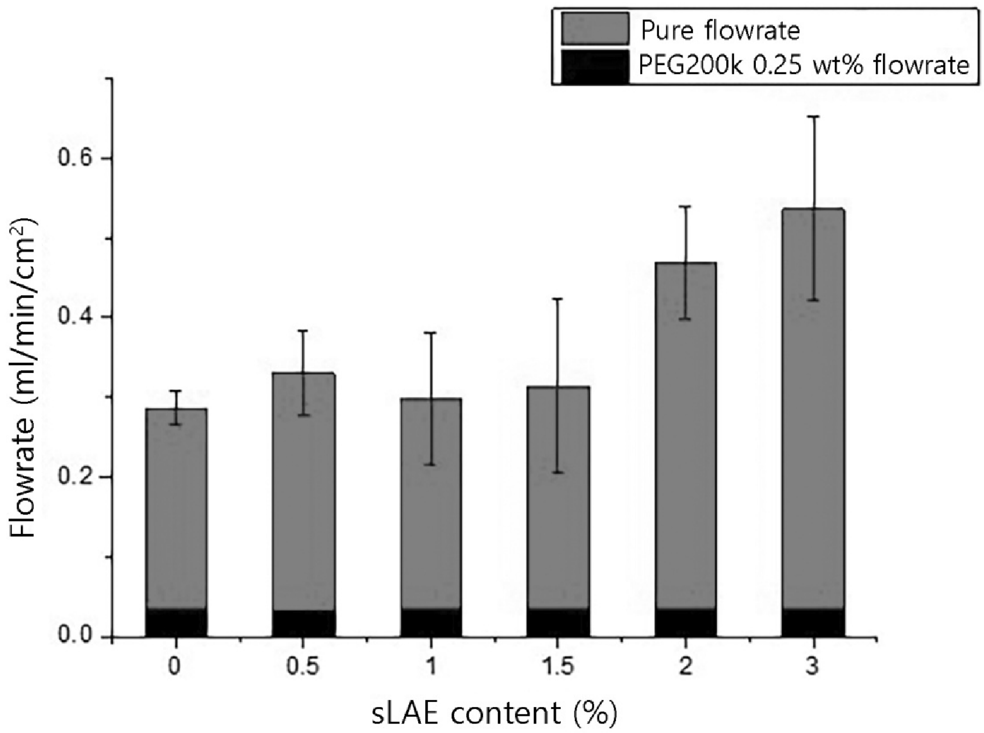
Pure flowrate
PEG200k 0.25 wt% flowrate
Flowrate (ml/min/cm²)
0.0
0.2
0.4
0.6
0
0.5
1
1.5
2
3
sLAE content (%)

[fig. 4]

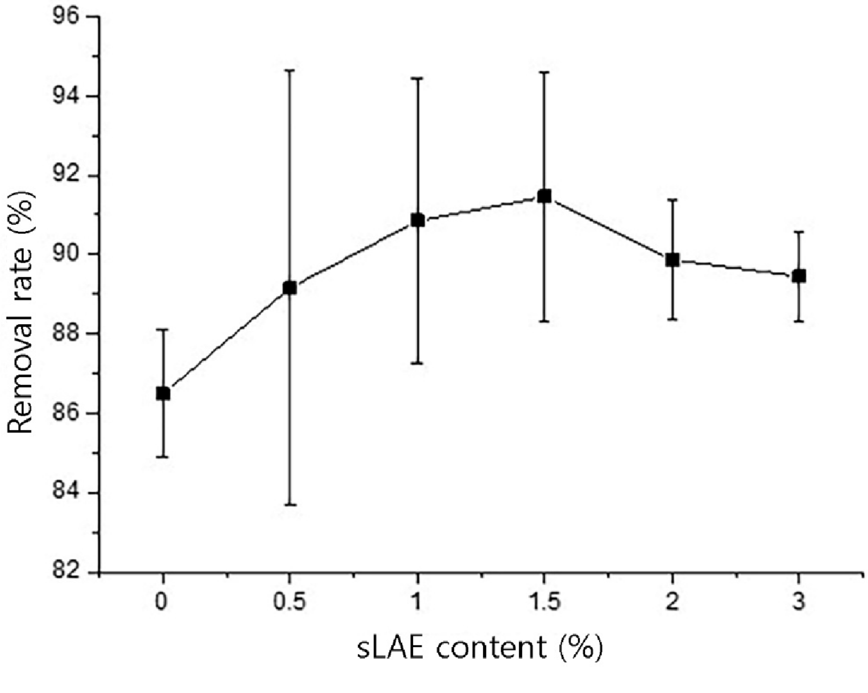

## INTERNATIONAL SEARCH REPORT

International application No.
**PCT/KR2023/019057**

**A. CLASSIFICATION OF SUBJECT MATTER**

**C08G 75/23**(2006.01)i; **C08L 81/06**(2006.01)i; **B01D 71/68**(2006.01)i; **B01D 71/76**(2006.01)i; **B01D 71/08**(2006.01)i

According to International Patent Classification (IPC) or to both national classification and IPC

**B. FIELDS SEARCHED**

Minimum documentation searched (classification system followed by classification symbols)

C08G 75/23(2006.01); A01N 25/02(2006.01); A01N 37/20(2006.01); B01D 71/68(2006.01); C08J 5/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고분자(polymer), 폴리에테르설폰(polyethersulfone), 에틸라우로일알지네이트(ethyl lauroyl arginate), 멤브레인(membrane)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0059984 A (LOTTE CHEMICAL CORPORATION) 03 June 2015 (2015-06-03) See abstract; claims 1-12; paragraphs [0053]-[0057] and [0068]-[0073]; and figure 1. | 1-9 |
| Y | GAMARRA-MONTES, A. et al. Antibacterial films made of ionic complexes of poly (γ-glutamic acid) and ethyl lauroyl arginate. Polymers. 2018, vol. 10, no. 21, inner pp. 1-14. See abstract; and formula 1. | 1-9 |
| Y | KR 10-2014-0054766 A (LOTTE CHEMICAL CORPORATION) 09 May 2014 (2014-05-09) See claims 1-19; and paragraphs [0052]-[0063]. | 7 |
| Y | GAMARRA, A. et al. Ionic coupling of hyaluronic acid with ethyl N-lauroyl L-arginate (LAE): Structure, properties and biocide activity of complexes. Carbohydrate polymers. 2018, vol. 197, pp. 109-116. See abstract; and formula 1. | 1-9 |
| A | KR 10-2017-0075698 A (DOOSAN HEAVY INDUSTRIES & CONSTRUCTION CO., LTD.) 03 July 2017 (2017-07-03) See claims 1-11. | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 October 2024** | **07 October 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2023/019057**

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0113292 A (RESEARCH & BUSINESS FOUNDATION SUNGKYUNKWAN UNIVERSITY) 08 October 2019 (2019-10-08)<br>See claims 1-9. | 1-9 |

Form PCT/ISA/210 (second sheet) (July 2022)

**INTERNATIONAL SEARCH REPORT**
**Information on patent family members**

International application No.
**PCT/KR2023/019057**

| Patent document cited in search report | Publication date (day/month/year) | Patent family member(s) | Publication date (day/month/year) |
|---|---|---|---|
| KR 10-2015-0059984 A | 03 June 2015 | WO 2015-076539 A1 | 28 May 2015 |
| KR 10-2014-0054766 A | 09 May 2014 | KR 10-1418064 B1 | 09 July 2014 |
| KR 10-2017-0075698 A | 03 July 2017 | KR 10-1843686 B1 | 29 March 2018 |
| KR 10-2019-0113292 A | 08 October 2019 | KR 10-2075945 B1 | 11 February 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020187017528
- KR 102084359
- KR 1020180087312
- KR 20180801